Europäisches Patentamt

European Patent Office

Office européen des brevets

(19)

(11) Veröffentlichungsnummer: **0 302 015**
**A2**

## (12) EUROPÄISCHE PATENTANMELDUNG

(21) Anmeldenummer: **88810500.4**

(22) Anmeldetag: **20.07.88**

(51) Int. Cl.4: **C 09 B 67/54**
**// B01D59/12**

(30) Priorität: **27.07.87 CH 2863/87**

(43) Veröffentlichungstag der Anmeldung:
**01.02.89 Patentblatt 89/05**

(84) Benannte Vertragsstaaten:
**BE CH DE FR GB IT LI**

(71) Anmelder: **CIBA-GEIGY AG**
**Klybeckstrasse 141**
**CH-4002 Basel (CH)**

(72) Erfinder: **Härtling, Christiane, Dr.**
**Hammerschmiedgasse 17**
**D-7860 Schopfheim-Fahrnau (DE)**

**Rabassa, Alberto**
**Im Goldbrunnen 20**
**CH-4104 Oberwil (CH)**

(54) Verfahren zur kontinuierlichen Aufarbeitung von wässrigen Rohfarbstoffsuspensionen.

(57) Bei der kontinuierlichen Aufarbeitung von wässrigen Rohfarbstoffsuspensionen in einer mehrstufigen Membrantrennanlage wird jeder Membrantrennstufe eine Farbstoffsuspension sowie Waschwasser, Permeat aus der nachfolgenden Membrantrennstufe oder ein Gemisch aus Waschwasser und Permeat zugeführt. Es erfolgt eine Auftrennung in Retentat (Konzentrat) und Permeat, wobei der Grad der Konzentrierung und der Entsalzungsgrad in jeder Membrantrennstufe über eine geeignete Messgrösse, z.B. die Leitfähigkeit oder das Volumen des jeweiligen Permeats oder die Konzentration des Retentats gesteuert wird. Diese Steuerung erlaubt die reproduzierbare Herstellung von Farbstoffpräparaten mit konstanten Eigenschaften und führt dank der Optimalisierung der Volumenströme zu einer erheblichen Reduktion der Abwasserlast.

Figur 1

## Beschreibung

### Verfahren zur kontinuierlichen Aufarbeitung von wässrigen Rohfarbstoffsuspensionen

Die vorliegende Erfindung betrifft ein Verfahren zur kontinuierlichen Aufarbeitung von wässrigen Rohfarbstoffsuspensionen in einer mehrstufigen Membrantrennanlage. Unter Aufarbeitung soll dabei insbesondere die Entfernung von Ballaststoffen, insbesondere von Salzen, aus den Farbstoffsuspensionen und deren Aufkonzentrierung verstanden werden. Die Farbstoffsuspensionen können solche von wasserunlöslichen oder in Wasser schwerlöslichen aber auch von wasserlöslichen Farbstoffen sein.

Organische Farbstoffe fallen am Ende der Synthese z.B. in Form verdünnter wässriger Syntheselösungen oder als Synthesesuspensionen unterschiedlicher Konzentration an, aus denen der Farbstoff in der Regel durch Salzzugabe ausgefällt und dann in Filterpressen abgepresst wird. Gegebenenfalls kann man die Lösungen oder Suspensionen auch direkt weiterverarbeiten.

Aus den erhaltenen Presskuchen können durch Zugabe von Wasser Farbstoffsuspensionen oder Farbstofflösungen für die weitere Verarbeitung hergestellt werden, die jedoch (- synthese- und verarbeitungsbedingt -) noch unerwünschte Mengen an Salzen und gegebenenfalls organischen Nebenprodukten enthalten.

Ein hoher Salzgehalt und organische Nebenprodukte wirken sich vor allem negativ auf die Haltbarkeit von flüssigen Farbstoffzubereitungen aus,indem sie z.B. zu Ausfällungen führen. Die organischen Nebenprodukte, die meistens auch eine Eigenfarbe besitzen, können zusätzlich zu einer unerwünschten Verschiebung des Farbtons führen.

Notwendige Verarbeitungsmassnahmen mit dem Ziel, verkaufsfertige Farbstoffzubereitungen herzustellen, betreffen deshalb insbesondere die Entfernung von Nebenprodukten und Salzen (Ballaststoffen) und die Aufkonzentrierung der rohen Farbstofflösungen oder -suspensionen.

Die Anwendung membrangebundener Filtriertechniken zur Aufarbeitung solcher Lösungen oder Suspensionen ist allgemein bekannt, wobei allerdings bezüglich einer kontinuierlichen Verfahrensführung solcher Aufarbeitungsverfahren noch erhebliche Probleme bestehen. Insbesondere fehlt es noch an einer geeigneten Steuerung dieser Verfahren, die einerseits den variierenden Zusammensetzungen der Farbstoffsuspensionen Rechnung trägt und andererseits den Membrantrennprozess in der mehrstufigen Membrantrennanlage operabel hält, d.h. die notwendigen Volumenströme der beteiligten Produkte so aufeinander abstimmt, dass ein optimaler Grad der Konzentrierung und Entsalzung (Entfernung von Ballaststoffen allgemein) der Farbstoffsuspensionen erreicht wird.

Aufgabe der vorliegenden Erfindung ist es daher, ein Verfahren zur kontinuierlichen Aufarbeitung von wässrigen Rohfarbstoffsuspensionen bereitzustellen, das mit Hilfe einer geeigneten Steuerung einen verbesserten Wirkungsgrad aufweist, flexibel ist gegenüber Aenderungen der Aufarbeitungsbedingungen, indem diese z.B. an die wechselnden Konzentrationen und Temperaturen aber auch an pH-Wertänderungen der Farbstoffsuspensionen angepasst werden müssen, und daher vielseitig anwendbar ist.

Es wurde nun gefunden, dass die gestellte Aufgabe durch das nachfolgend definierte Verfahren zur Aufarbeitung von wässrigen Farbstoffsuspensionen, das in einer mehrstufigen Membrantrennanlage kontinuierlich durchgeführt wird, gelöst werden kann.

Gegenstand der vorliegenden Erfindung ist daher ein Verfahren zur kontinuierlichen Aufarbeitung von wässrigen Rohfarbstoffsuspensionen in einer mehrstufigen Membrantrennanlage, das dadurch gekennzeichnet ist, dass man

(a) jeder Membrantrennstufe(n), wobei n eine ganze Zahl grösser als 1, insbesondere 2 bis 5, ist, eine Farbstoffsuspension $(F_n)$ sowie Waschwasser $(WW_n)$, Permeat $(P_{n+1})$ aus der nachfolgenden Membrantrennstufe $(n+1)$ oder Gemische aus $(WW_n)$ und $(P_{n+1})$ zuführt und in eine Farbstoffsuspension $(F_{n+1})$ und eine Permeat $(P_n)$ auftrennt, und

(b) den Grad der Konzentrierung $(X_{F_n})$ und den Entsalzungsgrad $(X_{B_n})$ in jeder Membrantrennstufe über eine geeignete Messgrösse steuert.

Weitere Gegenstände der vorliegenden Erfindung sind die Anwendung des Verfahrens für Farbstoffsuspensionen von in Wasser schwer bis unlöslichen Farbstoffen als auch von wasserlöslichen Farbstoffen sowie die Verwendung der erhaltenen Farbstoffzubereitungen zur Herstellung von verkaufsfertigen konzentrierten flüssigen oder festen Farbstoffpräparaten, die dann zum Färben und Bedrucken der verschiedensten Substrate, z.B. von natürlichen oder synthetischen, insbesondere textilen Fasermaterialien, ferner auch von Papier oder Leder Verwendung finden können.

Als in Wasser unlösliche bis schwerlösliche Farbstoffe kommen Pigmente und vor allem Dispersionsfarbstoffe und Küpenfarbstoffe in Betracht. Diese sind dem Fachmann bekannt. Auf die entsprechenden Zusammenstellungen in Colour Index (C.I.) -pigments, disperse dyes, vat dyes -wird hingewiesen.

Es handelt sich um Farbstoffe verschiedener Klassen, bei den Dispersionsfarbstoffen beispielsweise um Nitrofarbstoffe, Aminoketonfarbstoffe, Ketoniminfarbstoffe, Methinfarbstoffe, Nitrodiphenylaminfarbstoffe, Chinolinfarbstoffe, Aminonaphthochinonfarbstoffe, Cumarinfarbstoffe und insbesondere um Anthrachinonfarbstoffe und Azofarbstoffe, wie Monoazo- und Disazofarbstoffe.

Als Küpenfarbstoffe finden beispielsweise indigoide Farbstoffe, anthrachinoide Farbstoffe, wie z.B. Indanthren, sowie Schwefelfarbstoffe Verwendung.

Als wasserlösliche organische Farbstoffe kommen beispielsweise saure, direktziehende (C.I. acid and direct dyes) und basische (C.l. basic dyes), wie Metallkomplex-, Chromierungs-, Entwicklungs- und Beizenfarbstoffe sowie vor allem Reaktivfarbstoffe in Frage. Es handelt sich insbesondere um sulfonsäure- bzw. carbonsäuregruppenhaltige, metallfreie oder metallhaltige und metallisierbare Mono-, Dis- und Polyazofarbstoffe, Pyrazolon-, Thioxanthron-, Oxazin-, Stilben-, Formazan-, Anthrachinon-, Nitro-, Methin-, Triphenylmethan-, Xanthon-, Naphthazarin-, Styryl-, Azastyryl-, Naphthoperinon-, Chinophthalon-und Phthalocyaninfarbstoffe, sowie um solche Farbstoffe, die mindestens einen faserreaktiven Rest im Farbstoffmolekül aufweisen.

Bei den gemäss vorliegendem Verfahren in erster Linie zu Farbstoffzubereitungen verarbeiteten wasserlöslichen anionischen Farbstoffen handelt es sich insbesondere um die Alkalimetallsalze oder Ammoniumsalze der sogenannten sauren Wollfarbstoffe, der Reaktivfarbstoffe oder der substantiven Baumwollfarbstoffe der Azo-, Anthrachinon- und Phthalocyaninreihe. Als Azofarbstoffe kommen z.B. metallhaltige oder metallfreie Mono- und Disazofarbstoffe sowie Formazanfarbstoffe, die eine oder mehrere Sulfonsäuregruppen enthalten, in Betracht.

Bei den wasserlöslichen basischen Farbstoffen handelt es sich um die gebräuchlichen Salze und Metallhalogenid-, beispielsweise Zinkchlorid-Doppelsalze der bekannten kationischen Farbstoffe, insbesondere der Methin-, bzw. Azamethinfarbstoffe, die z.B. einen Indolinium-, Pyrazolium-, Imidazolium-, Triazolium-, Tetrazolium-, Oxadiazolium-, Thiodiazolium-, Oxazolium-, Thiazolium-, Pyridinium-, Pyrimidinium-, PyraziniumRing enthalten.

Die genannten Heterocyclen können gegebenenfalls substituiert und/oder durch aromatische Ringe anelliert sein. Ferner kommen auch kationische Farbstoffe der Diphenylmethan-, Triphenylmethan-, Oxazin-, Thiazin-und 1,2-Pyran-Reihe in Frage, sowie schliesslich auch Farbsalze der Arylazo- und Anthrachinonreihe.

Unter dem Begriff Farbstoffe sollen gemäss vorliegender Erfindung auch optische Aufheller verstanden werden.

Es kommen z.B. in Wasser unlösliche bis schwerlösliche Aufheller der folgenden Verbindungsklassen in Frage: Stilbene, Cumarine, Benzocumarine, Pyrene, Pyrazine, Pyrazoline, Oxazine, Mono- oder Dibenzoxazolyl- oder -imidazolylverbindungen, Aryltriazol und v-Triazol-Derivate sowie Naphthalsäureimide.

Die wasserlöslichen Aufheller sind in erster Linie Stilbenaufheller, vor allem solche von Typ der Bistriazinylaminostilben-disulfonsäure, der Bis-styrylbiphenyle und -benzole und der Bis-triazolylstilbendisulfonsäuren. Dabei liegen die sulfogruppenhaltigen Aufheller vorzugsweise in Form ihrer Metallsalze vor, wie sie bei der Synthese anfallen, z.B. Lithium-, Kalium-, Magnesium- oder vor allem Natriumsalze sowie Ammonium-, Amin- oder Alkanolaminsalze.

Diese Farbstoffe bzw. optischen Aufheller sind bekannt und werden nach bekannten kontinuierlich oder diskontinuierlich arbeitenden Syntheseverfahren hergestellt; sie fallen am Ende der Synthese, je nach Verfahrensführung und Löslichkeitseigenschaften, in Form einer Syntheselösung oder Synthesesuspension an.

Um aus Farbstoffsyntheselösungen wasserlöslicher Farbstoffe die für das erfindungsgemässe Verfahren geeigneten Farbstoffsuspensionen (wässrige Rohfarbstoffsuspensionen) herzustellen, kann man z.B. die Farbstoffe aus den Syntheselösungen aussalzen, über Pressfilter abfiltrieren und die Farbstoffpresskuchen nur mit soviel Wasser anschlämmen, dass nur Farbstoffsuspensionen, nicht jedoch Lösungen entstehen.

Vorteilhaft ist es, diese Farbstoffsynthesesuspensionen der wasserlöslichen sowie auch entsprechende Suspensionen von in Wasser schwer-bis unlöslichen Farbstoffen vor der erfindungsgemässen Behandlung in der mehrstufigen Membrantrennanlage so vorzubehandeln (zu standardisieren), dass sie sowohl einen gewissen pH-Wert-Bereich (Neutralisation stark saurer Farbstoffsynthesesuspensionen), eine gewisse Konzentration an Farbstoff (Filtrier-Aussalzmethode, gegebenenfalls auch vorgängige Aufkonzentration durch eine Membranbehandlung) und eine Temperatur in einem gewissen Temperaturbereich aufweisen, als auch in einer für das Membrantrennverfahren geeigneten (physikalischen) Form (möglichst geringer kolloidaler Anteil) vorliegen, was z.B. durch thermische Konditionierung der Farbstoffe erreicht werden kann.

Die erfindungsgemäss eingesetzten Farbstoff(synthese)suspensionen haben in der Regel einen Farbstoffgehalt von 5 bis 20 Gew.-% und einen Ballast(salz)gehalt (im wesentlichen anorganische Salze) von 1 bis 30 Gew.-%, insbesondere von 4 bis 10 Gew.-%. Der pH-Wert der Suspensionen kann im Bereich von 3 bis 10, vorzugsweise 3 bis 9 liegen, ihre Temperaturen liegen im Bereich von 10 bis 80°C, vorzugsweise im Bereich von 20 bis 60°C.

Unter dem Begriff wässrige Rohfarbstoffsuspensionen, wie sie erfindungsgemäss aufgearbeitet werden, sollen neben den rein wässrigen auch wässrig-organische Suspensionen verstanden werden.

Für das erfindungsgemässe Verfahren zur kontinuierlichen Aufarbeitung der wässrigen Farbstoffsuspensionen wird die mehrstufige Membrantrennanlage in der Regel nach dem Prinzip der Ultrafiltration und/oder der Querstrom (Cross-flow)-Mikrofiltration betrieben.

Die Ultrafiltraton wird normalerweise mit feinporigen Membranen mit Porendurchmessern von 1 bis 1000 nm, vorzugsweise 5 bis 1000 nm durchgeführt.

Die Ultrafiltration kann sowohl unter Druck als auch durch Anlegen eines Vakuums betrieben werden. Ferner kann auf seiten der Farbstofflösung unter Druck gearbeitet und permeatseitig gleichzeitig ein Vakuum angelegt werden. Gearbeitet wird allgemein mit einem Druck von 0,5 bis 10 bar oder einem Vakuum von 200 bis 20 mbar. Ultrafiltration durch Anlegen eines Vakuums kann vorteilhaft sein, da ein Unterdruck permeatseitig einer Verstopfung der Membran entgegenwirkt und den Membranflux deutlich steigert, allerdings muss bei niedrigsiedenden organischen Lösungsmitteln das Phänomen der Membranverkrustung berücksichtigt werden.

Als Membranen für die Ultrafiltration kommen sowohl solche aus anorganischem wie auch aus organischem Material in Frage.

Anorganische Membranen sind z.B. solche aus porösem Metall bzw. Metalllegierungen (sog. Metallsintermembranen z.B. aus porösem Stahl) oder solche aus porösem Kohlenstoff, dessen Oberfläche z.B. mit einer dünnen Schicht aus Zirkon-, Silizium- oder Aluminiumoxid belegt sein kann oder aus porösem Glas oder Keramik.

Organische Materialien zur Herstellung von Membranen sind z.B. organische Polymere, insbesondere gegebenenfalls chemisch oder physikalisch modifizierte Polyethylene, Polypropylene, Polytetrafluorethylene, Celluloseacetate, Polyacrylnitrile, Polyvinylalkohole, Polystyrole, Polysulfone, Polyimide oder Polyamide.

Bevorzugt sind solche Membranen aus organischen Polymeren, die insbesondere an der Oberfläche durch saure oder basische Gruppen modifiziert sind. Bei dem polymeren Membranmaterial handelt es sich um natürliche, halbsynthetische oder synthetische Materialien, die als reaktionsfähige Gruppen beispielsweise Hydroxy-, Amino- und/oder Amidoximgruppen enthalten. Derartige Materialien können mit geeigneten reaktiven Verbindungen umgesetzt werden, die einerseits saure oder basische Gruppen und andererseits mindestens eine unter Bildung einer chemischen (kovalenten) Bindung reaktionsfähige Gruppierung enthalten.

Bei den sauren Gruppen handelt es sich in erster Linie um Carboxyl-und Sulfongruppen und bei den basischen Gruppen um primäre, sekundäre oder tertiäre Aminogruppen, ferner Phosphonium- oder Sulfoniumgruppen.

Beispielsweise können folgende membranbildende Polymere in der angegebenen Weise modifiziert werden:

-Celluloseacetate, z.B. solche mit niedrigem Acetylgruppengehalt, aber auch höher acylierte Cellulose, z.B. sogenanntes Zweieinhalbacetat, oder

- Polyvinylalkohole,
- Polyacrylnitril und Copolymere aus Acrylnitril und anderen ethylenisch ungesättigten Monomeren,
- Polysulfone,
- Polystyrole,
- Polyamide oder
- Polyimide.

Als reaktive Verbindungen, die eine saure oder basische Gruppe enthalten und zur chemischen Modifikation der membranbildenden Polymere bzw. der Membranen selbst geeignet sind, kommen sowohl farblose als auch farbige Verbindungen in Betracht, vor allem saure Reaktivfarbstoffe, die verschiedenen Klassen angehören können, wir Anthrachinon-, Azo- und Formazanfarbstoffe. Sie können gegebenenfalls auch als Metallkomplexe vorliegen.

Besonders geeignet sind ionisch modifizierte Celluloseacetat-, Polyacrylnitril-, Polystyrol-, Polyvinylalkohol- und insbesondere Polysulfonmembranen (US-A-4,247,401, US-A-4,604,204, US-A-4,584,103, US-A-4,477,634, US-A-4,690,765, US-A-4,690,766, EP-A-47 953, EP-A-82 355).

Für die Querstrom-Mikrofiltration werden üblicherweise mikroporöse Membranen mit Porendurchmessern von 0,1 bis 40 µm, vorzugsweise von 0,2 bis 10 µm verwendet.

Die Mikrofiltration wird bei einem Arbeitsdruck von 0,5 bis 10 bar, vorzugsweise 0,5 bis 5 bar durchgeführt.

Als Membranen für die Mikrofiltration kommen sowohl solche aus organischem als auch aus anorganischem Material in Frage. Es handelt sich dabei um Materialien wie sie auch für die Herstellung von Ultrafiltrationsmembranen genannt sind.

Die Membranen werden üblicherweise in Form von Membranröhrchen eingesetzt, wobei die Röhrchen in einem Rohrmembranmodul zusammengefasst werden; sie können jedoch auch je nach Art der Membrantrennanlage in Form von Platten, Schläuchen oder als Hohlfasern ausgebildet sein.

Die einzelnen Stufen der Membrantrennanlage sind hintereinandergeschaltet. Wenn die Farbstoffsuspensionen die gesamte Membrantrennanlage durchlaufen haben, sollten sie den gewünschten hohen Gehalt an Farbstoff und niedrigen Salzgehalt aufweisen.

Der Grad der Konzentrierung und Entsalzung kann dabei von Stufe zu Stufe gleich oder verschieden sein. Gegebenenfalls kann auch eine Stufe nur der Entsalzung dienen. Im letzteren Fall spricht man von einer kontinuierlich durchzuführenden Diafiltration, bei der das salz(ballaststoff)haltige Permeat durch die entspechende Menge reinen Lösungsmittels (Wasser oder demineralisiertes Wasser) ersetzt wird. Durch diesen kontinuierlichen Auswaschprozess werden alle Komponenten, die die Membran passieren können, aus der Farbstoffsuspension herausgewaschen, wobei deren Farbstoffgehalt praktisch konstant bleibt.

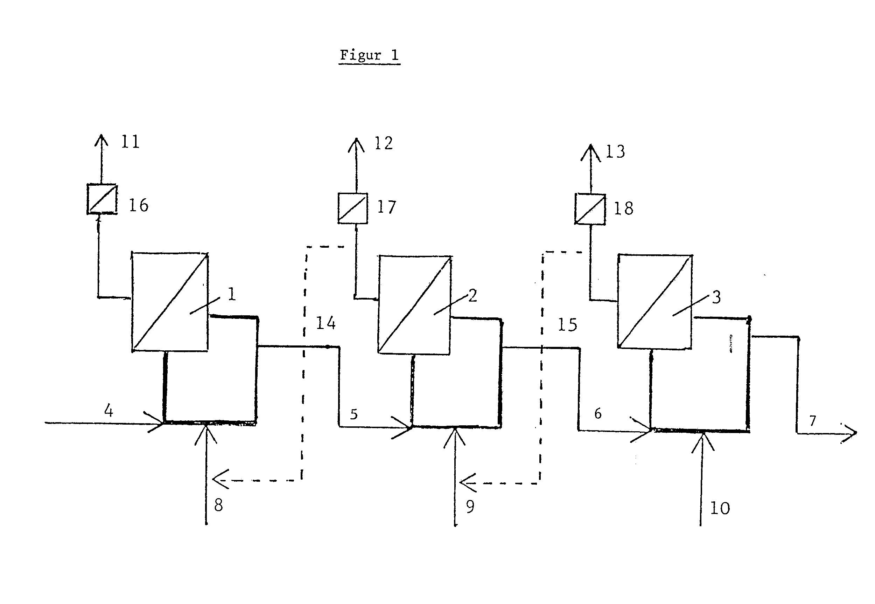

Im folgenden wird das erfindungsgemässe Verfahren anhand der Beschreibung bevorzugter Ausführungsformen in Verbindung mit der Zeichnung (Figur 1) näher erläutert.

Figur 1 zeigt in einem Diagramm den Ablauf des erfindungsgemässen Verfahrens anhand einer 3-stufigen Membrantrennanlage.

Die in Fig. 1 angegebenen Bezugsziffern bezeichnen die folgenden Gegenstände:

1, 2, 3 - Membrantrennstufen mit geschlossener Kreislaufvorrichtung bestückt mit Modulen aus Rohrmembranen, in denen die Farbstoffsuspension in ein Permeat und ein Konzentrat aufgetrennt wird,

4, 5, 6 - Farbstoffsuspensionen, die den Membrantrennstufen 1, 2, 3 zugeführt werden (F$_1$, F$_2$, F$_3$) (5 und 6 sind die Konzentrate der Stufen 1 und 2),

7 - Farbstoffsuspensionen, die die mehrstufige Membrantrennanlage verlässt (Konzentrat der 3. Stufe) ($F_4$),

8, 9, 10 - Waschwasserzufuhr zu den Membrantrennstufen 1, 2 und 3 ($WW_1$, $WW_2$, $WW_3$)

11, 12, 13 - Permeate der Membrantrennstufen 1, 2 und 3 ($P_1$, $P_2$, $P_3$),

14, 15 - Rückführungen von Permeat der 2. und 3. Membranstufe in die 1. und 2. Membranstufe,

16, 17, 18 - Ventile mit Durchflussmessgeräten für die Steuerung und Messung einer geeigneten Messgrösse, z.B. der Konzentration (Leitfähigkeit) des Permeats der Membrantrennstufen 1, 2 und 3 oder der Permeatvolumina.

Die Zufuhr der Farbstoffsuspension (4) und der Waschwässer (8, 9, 10) erfolgt über entsprechende Zuführpumpen, die über Durchflussmessgeräte geregelt werden (nicht in Fig. 1 aufgenommen). Für die Zufuhr der Farbstoffsuspensionen 5 und 6 in die Membrantrennstufen 2 und 3 werden normalerweise keine separaten Zuführpumpen benötigt.

Ferner benötigt die Membrantrennanlage eine weitere Anzahl von Pumpen (Kreislaufpumpen), Ventilen (z.B. Kreislaufentlüftungsventilen, Stufenendventilen, Ueberdrucksicherheitsventilen) sowie Druchmessgeräten, ferner auch Stabilisierungsbehälter (zur Vorbereitung der Farbstoffsuspensionen) sowie z.B. weitere übliche Lagerbehälter, die ebenfalls nicht in Fig. 1 aufgenommen sind.

Alle Pumpen, Ventile, Durchfluss- und Druckmessgeräte sind an einen Prozessrechner angeschlossen.

Geeignete Messgrössen zur Steuerung des erfindungsgemässen Verfahrens sind z.B. die Leitfähigkeit des Permeats, das Volumen des Farbstoffkonzentrats ($F_{n+1}$) und insbesondere das Permeatvolumen ($P_n$). Ueber das Permeatvolumen ($P_n$) kann man so beispielsweise die Volumenströme ($F_n$ und $WW_n$) steuern und den Konzentrations-und/oder Entsalzungsgrad für jede Membrantrennstufe n festlegen.

Diese Steuerung erfolgt über die mathematischen Beziehungen

$$(1) \qquad X_{F_n} = \frac{C_{F_{n+1}}}{C_{F_n}} = \frac{F_n}{F_{n+1}} \quad ,$$

$$(2) \qquad X_{B_n} = \frac{C_{B_{n+1}}}{C_{B_n}} = \frac{F_n}{F_n + WW_n} \qquad \text{und}$$

$$(3) \qquad P_n = F_n + WW_n - F_{n+1} \quad ,$$

worin $C_{Fn}$ und $C_{Fn+1}$ bzw. $C_{Bn}$ und $C_{Bn+1}$ die Farbstoff- bzw. Salzkonzentrationen der Farbstoffsuspensionen ($F_n$) und ($F_{n+1}$) angeben, die in die n-te Membrantrennstufe eingebracht werden bzw. diese wieder verlassen, $P_n$ das Volumen des Permeats der n-ten Membrantrennstufe und $WW_n$ das Volumen des Waschwassers ist, das der n-ten Membrantrennstufe zugeführt wird, und $X_{F_n}$ und $X_{B_n}$ der Grad der Konzentrierung bzw. Entsalzung (Konzentrierungs- bzw. Entsalzungsfaktor) in jeder Membrantrennstufe sind. Der Grad der Konzentrierung ($X_{F_{ges}}$) und der Entsalzungsgrad ($X_{B_{ges}}$) der gesamten Membrantrennanlage ergibt sich dabei aus dem Produkt der einzelnen $X_{F_n}$- bzw. $X_{B_n}$-Werte:

$$(4) \qquad X_{F_{ges}} = X_{F_1} \cdot X_{F_2} \cdot \ \ldots \ K_{F_n}$$

$$(5) \qquad X_{B_{ges}} = X_{B_1} \cdot X_{B_2} \cdot \ \ldots \ X_{B_n}$$

In Gleichung (1) wird der Farbstoffkonzentrierungsfaktor ($X_{F_n}$) in Beziehung zu den Farbstoffsuspensionsströmen (Konzentraten) $F_n / F_{n+1}$ gesetzt (Konzentratregelung). Ersetzt man $F_{n+1}$ durch dessen Bedeutung in Gleichung (3), so erhält man

$$(6) \qquad X_{F_n} = \frac{F_n}{F_n + WW_n - P_n}$$

und damit eine Beziehung für die Regelung über das Permeat(volumen) ($P_n$ - Permeatregelung).

Ersetzt man in Gleich (2) $F_n + WW_n$ durch den entsprechenden Ausdruck aus Gleichung (3), so erhält man

$$(7) \qquad X_{B_n} = \frac{F_n}{P_n + F_{n+1}} \quad ,$$

die neben einer Regelung über die Konzentration der Farbstoffsuspensionsströme (Konzentraten) $F_n$ / $F_{n+1}$ auch eine solche über das Permeatvolumen ($P_n$ - Permeatregelung) ermöglicht.

Die Gleichungen (1) bis (5) sind in der Technik der Membrantrennverfahren an und für sich bekannt. Ihre Anwendung zur Regelung von Volumenströmen -über Volumina an sich oder über Konzentrationen (z.B. Leitfähigkeit) -in mehrstufigen, kontinuierlich arbeitenden Membrantrennanlagen und damit die Regelung der Entsalzung und Konzentrierung dieser Volumenströme ist indessen neu und Gegenstand des vorliegenden erfinderischen Verfahrens.

Stellt man - unter der Annahme, dass $F_n$ und $WW_n$ konstante Werte sind -gemäss Gleichung (3) einen grossen Wert $P_n$ ein (grosses Permeatvolumen), so ist dies möglich, wenn $F_{n+1}$ (Konzentrat, das die Membrantrennstufe verlässt bzw. in die Membrantrennstufe $n+1$ eingegeben wird) möglichst klein ist, d.h., dass eine Konzentrierung und Entsalzung stattfindet.

Ein kleiner Wert für $P_n$ bedeutet hingegen, dass eine grosse Menge $F_{n+1}$ möglich ist, d.h. es findet eine Entsalzung (Auswaschung von Salz) bei konstanten Volumenströmen oder gegebenenfalls verbunden mit einer Verdünnung von $F_{n+1}$ statt.

Das Permeatvolumen $P_n$ kann einerseits für jede Membrantrennstufe auf einen Wert eingestellt werden, bleibt dann während der Behandlung der Farbstoffsuspension in dieser Membrantrennstufe konstant, steuert so die Menge (das Volumen) des Konzentrats das die Membrantrennstufe n verlässt und legt somit fest, ob in der genannten Membrantrennstufe eine Entsalzung, gegebenenfalls mit Verdünnung (Diafiltration) oder eine Konzentrierung und Entsalzung stattfindet.

Andererseits kann das Permeatvolumen $P_n$ als Messgrösse aber auch während der Einzeloperation in einer Membrantrennstufe variiert werden, z.B. während der Startphase, und dann, wenn das Volumen $F_n$ und dessen Konzentration an Farbstoff und Ballaststoff nicht konstant ist (unregelmässige Zufuhr der Farbstoffsuspension, z.B. synthesebedingt).

Ein Teil oder die gesamte Menge des Permeats ($P_{n+1}$) der Membrantrennstufe $n+1$ kann rezirkuliert werden, d.h. in die vorhergehende Membrantrennstufe n zurückgeführt werden, wo sie, gegebenenfalls mit zugeführtem Waschwasser $WW_1$ zur Diafiltration dient. Der Salz(Ballast)gehalt dieser rezirkulierten Permeate sollte dabei möglichst gering sein.

Durch diese Permeatzirkulation kann man die Abwassermenge (Abwasser = Summe der Volumina aller Permeate) so niedrig wie möglich halten.

Führt man der Membrantrennanlage verdünnte aber relativ salzreiche Rohfarbstoffsuspensionen zu, so ist eine Permeatrezirkulierung nicht geeignet (Permeat weist hohen Salzgehalt auf).

Bei relativ konzentrierten Rohfarbstoffsuspensionen mit bereits hohem Farbstoffgehalt ist die Permeatrezirkulierung hingegen eine geeignete Massnahme, um die Mengen an Waschwasser und Permeat zu reduzieren.

Gegebenenfalls kann man auch zur weiteren (vollständigen) Entsalzung z.B. ein Umkehrosmoseverfahren anschliessen.

Das erfindungsgemässe Verfahren erlaubt es, konzentrierte und weitgehend entsalzte Farbstoffsuspensionen mit konstanten Eigenschaften und guter Reproduzierbarkeit herzustellen. Dies erleichtert ganz wesentlich die Weiterverarbeitung zu handels- und gebrauchsfertigen Farbstoffpräparaten, die in üblicher Weise erhalten werden können.

Die für die Herstellung von handels- und gebrauchsfertigen Farbstoffpräparaten üblichen Zusätze sind beispielsweise schaumdämpfende Mittel, Gefrierschutzmittel, Feuchthaltemittel, Dispergiermittel und/oder Antimikrobika. Nur noch durch Verdünnen mit Wasser und/oder mit Hilfe von Coupagemitteln kann man sie dann auf einen vorgegenenen Endfarbstoffgehalt einstellen. Die Farbstoffdispersion kann aber auch, gegebenenfalls nach Zugabe von Zusätzen, wie Bindemitteln, Entstäubungsmitteln, Netzmitteln, Dispergiermitteln und/oder Coupagemitteln, durch Wasserentzug, in ein festes Farbstoffpräparat überführt werden. Dank der erhöhten Farbstoffkonzentration benötigt man weniger Energie zum Trocknen. Man verwendet übliche Trocknungsverfahren, insbesondere die Sprühtrocknung.

Verwendung finden die Farbstoffpräparate zur Herstellung von Färbebädern, Klotzflotten oder Druckpasten für die verschiedensten Substrate, insbesondere für textile Fasermaterialien, Papier oder Leder.

Die folgenden Beispiele dienen zur Erläuterung der Erfindung, ohne sie darauf zu beschränken. Teile bedeuten Gewichtsteile und Prozente Gewichtsprozente.

## Beispiel 1

Eine wässrige Farbstoffdispersion von C.I. Disperse Orange 140 wird unter Rühren 30 Minuten bei 98°C behandelt (thermisch stabilisiert). Die Farbstoff- bzw. Ballast(Salz)-Konzentration beträgt $C_{F_1}$ = 12.6 Gew.-% bzw. $C_{B_1}$ = 6,0 Gew.-%. Diese Farbstoffsuspension wird in einer 3-stufigen Membrantrennanlage (Ultrafiltrationsanlage) aufkonzentriert und entsalzt. Die Farbstoffsuspension soll nach Beendigung des Verfahrens einen Farbstoffgehalt $C_{F_4}$ von etwa 18,0 Gew.-% und einen Ballast(Salz)gehalt $C_{B_4}$ von etwa 0,8

6

Gew.-% aufweisen. Die Dispersion weist eine Temperatur von 35°C auf. Der Druck in den Kreisläufen jeder Membrantrennstufe beträgt etwa 1,5 bar.

Das Verfahren wird gemäss dem Flussdiagramm von Fig. 1 durchgeführt. Die Membrantrennstufen (1, 2, 3) mit geschlossenem Kreislauf sind mit Modulen bestückt, die auf Trägermaterial Kohlenstoff mit Membranen aus Zirkonoxid beschichtet sind; die Membranfläche beträgt 0,055 m² pro Membrantrennstufe. Das Kreislaufvolumen beträgt jeweils 360 ml.

Nach Durchlaufen einer Startphase wird der für die Durchführung des Verfahrens notwendige stationäre Zustand dann erreicht, wenn das Wasser in den Membrantrennstufen 1 bis 3 durch Farbstoffsuspension der Konzentrationen $C_{F_2}$ bis $C_{F_4}$ ersetzt ist. Die Volumenströme der Farbstoffsuspension und des Waschwassers sind der Grösse der Membrantrennanlage angepasst.

Um die gewünschte Endspezifikation der Farbstoffsuspension zu erhalten, wird das Verfahren in den einzelnen Membrantrennstufen wie folgt gesteuert:

Stufe 1: In Stufe 1 werden über Dosierpumpen je 50 ml/Min Farbstoffsuspension ($F_1$) und Waschwasser ($WW_1$) gespeist. Die Permeatmenge der Stufe 1 ($P_1$) wird auf 50 ml/Min geregelt (16). Damit ergeben sich für den aus der Stufe 1 austretenden Farb stoffsuspensionsstrom $F_2$ ebenfalls 50 ml/Min mit einem Farbstoffgehalt $C_{F_2} = 12,6$ Gew.-% und einem Ballastgehalt von $C_{B_2} = 3,0$ Gew.-%.

Stufe 2: Zum Farbstoffsuspensionsstrom $F_2$ werden über eine Dosierpumpe 40 ml/Min Waschwasser ($WW_2$) in die Stufe 2 gespeist. Die Permeatmenge ($P_2$) wird auf 50 ml/Min geregelt (17). Damit ergeben sich für den aus der Stufe 2 austretenden Farbstoffsuspensionsstrom $F_3$ 40 ml/Min mit einem Farbstoffgehalt von $C_{F_3} = 15,75$ Gew.-% und einem Ballastgehalt von $C_{B_3} = 1,7$ Gew.-%.

Stufe 3: Zum Farbstoffsuspensionsstrom $F_3$ werden über eine Dosierpumpe 45 ml/Min Waschwasser ($WW_3$) in die Stufe 3 gespeist. Die Permeatmenge ($P_3$) wird auf 50 ml/Min geregelt (18). Aus Stufe 3 tritt ein Farbstoffsuspensionsstrom $F_4$ von 35 ml/Min mit den Endspezifikationen: Farbstoffgehalt $C_{F_4} = 18$ Gew.-% und Ballastgehalt $C_{B_4} = 0,8$ Gew.-%.

## Beispiel 2

Eine wässrige Farbstoffsuspension von C.I. Acid Yellow 118 mit einem Farbstoffgehalt von $C_{F_1} = 12,2$ Gew.-% und einem Ballastgehalt von $C_{B_1} = 12,3$ Gew.-% wird in einer 2-stufigen Membrantrennanlage (Ultrafiltrationsanlage) aufkonzentriert und mit Permeatrezirkulation entsalzt. Vor dieser Aufarbeitung erfolgt eine Chromierung des Farbstoffs und davor gegebenenfalls eine Aufkonzentrierung des nicht chromierten Farbstoffs in einer Ultrafiltrationsstufe. Die chromierte Farbstoffsuspension soll nach Beendigung des Verfahrens einen Farbstoffgehalt von $C_{F_3} = 20$ Gew.-% und einen Ballastgehalt von $C_{B_3} = 0,8$ Gew.-% haben. Die Dispersion hat eine Temperatur von etwa 70°C in den Stufen. Der Druck in den Kreisläufen liegt bei 4 bis 5 bar.

Das Verfahren wird in den Stufen 1 und 2 (oder 2 und 3) gemäss dem Flussdiagramm von Fig. 1 durchgeführt. Die zwei Membrantrennstufen mit geschlossenem Kreislauf sind mit Modulen bestückt, die auf Trägermaterial Kohlenstoff mit Membranen aus Zirkonoxid beschichtet sind; die Membranfläche beträgt 22 m² pro Stufe bei einem Kreislaufvolumen von 150 l.

Nach Durchlaufen einer Startphase wird der für die Durchführung des Verfahrens notwendige stationäre Zustand dann erreicht, wenn das Wasser in den Membrantrennstufen 1 und 2 durch Farbstoffsuspension der Konzentrationen $C_{F_2}$ und $C_{F_3}$ ersetzt ist und Stufe 2 ausreichend Permeat als Waschwasser für Stufe 1 liefert. Die Anlagendimensionierung ist dem von der Synthese vorgegebenen Farbstoffvolumenstrom angepasst.

Um die gewünschte Endspezifikation der Farbstoffsuspension zu erhalten, wird das Verfahren in den einzelnen Membrantrennstufen wie folgt gesteuert:

Stufe 1: In Stufe 1 werden 1000 l/h Farbstoffsuspension ($F_1$) und 3300 l/h Permeat der Stufe 2 ($P_2$) mit einem Ballastgehalt von 0,7 Gew.-% als Waschwasser ($WW_1$) gespeist. Die Permeatmenge der Stufe 1 ($P_1$) wird auf 3500 l/h geregelt. Damit ergeben sich für den aus der Stufe 1 austretenden Farbstoffsuspensionsstrom $F_2$ 800 l/h mit einem Farbstoffgehalt $C_{F_2} = 15,25$ Gew.-% und einem Ballastgehalt $C_{B_2} = 3,4$ Gew.-%.

Stufe 2: Zum Farbstoffsuspensionsstrom $F_2$ werden 3100 l/h Waschwasser in die Stufe 2 gespeist. Bei der auf 3300 l/h geregelten Permeatmenge ($P_2$) tritt aus Stufe 2 ein Farbstoffsuspensionsstrom $F_3$ von 600 l/h mit den Endspezifikationen Farbstoffgehalt $C_{F_3} = 20$ Gew.-% und Ballastgehalt $C_{B_3} = 0,7$ Gew.-%.

Ohne Permeatrezirkulation würden beim Entsalzen in beiden Stufen zusammen 6100 l/h chromhaltiges Abwasser entstehen. Die Permeatrezirkulation bringt in diesem Beispiel eine Abwasservolumenreduzierung um 43%.

## Beispiel 3

Eine wässrige saure Farbstoffdispersion von C.I. Disperse Blue 125 mit einem Farbstoff- bzw. Ballastgehalt von $C_{F_1} = 1,9$ Gew.-% und $C_{B_1} = 4,25$ Gew.-% wird in einer Membrantrennstufe (Ultrafiltration) aufkonzentriert, das Konzentrat in einem Stabilisierungskessel kontinuierlich neutralisiert und mit einer Verweilzeit von ca. 30 Minuten bei 95°C behandelt (thermisch stabilisiert).

Diese Farbstoffsuspension wird anschliessend in einer 2-stufigen Membrantrennanlage (Ultrafiltration) weiter aufkonzentriert und entsalzt. Die Farbstoffsuspension soll nach Beendigung des Verfahrens einen Farbstoffgehalt $C_{F_4}$ von etwa 19 Gew.-% und einen Ballastgehalt $C_{B_4}$ von etwa 0,8 Gew.-% haben.

Die Suspension weist vor der Stabilisierung eine Temperatur von 15 bis 20°C und nach der Stabilisierung eine Temperatur von 50 bis 60°C in den Stufen auf. Der Druck in den Kreisläufen liegt bei 4 bis 5 bar.

Das Verfahren wird gemäss dem Flussdiagramm von Fig. 1 durchgeführt, wobei der Konzentratstrom 5 über einen Stabilisierungskessel läuft. Die Membrantrennstufen (1, 2, 3) mit geschlossenem Kreislauf sind mit Moduln bestückt, die auf Trägermaterial Kohlenstoff mit Membranen aus Zirkonoxid beschichtet sind; die Membranfläche beträgt 22 m² pro Stufe bei einem Kreislaufvolumen von ca. 150 l.

Nach Durchlaufen der Startphase wird der für die Durchführung des Verfahrens notwendige stationäre Zustand erreicht, wenn das Wasser in den Membrantrennstufen 1 bis 3 durch Farbstoffsuspension der Konzentrationen $C_{F_2}$ bis $C_{F_4}$ ersetzt ist. Der Volumenstrom $F_1$ der Farbstoffsuspension ist vorgegeben durch die Leistung einer kontinuierlichen Farbstoff-Synthese-Anlage.

Um die gewünschte Endspezifikation der Farbstoffsuspension zu erhalten, wird das Verfahren in den einzelnen Membrantrennstufen wie folgt gesteuert:

Stufe 1: In Stufe 1 werden 5250 l/h Farbstoffsuspension ($F_1$) gepumpt. Die Permeatmenge der Stufe 1 ($P_1$) wird auf 4000 l/h geregelt. Damit ergeben sich für den aus der Stufe 1 austretenden Farbstoffsuspensionsstrom $F_2$ 1250 l/h einem Farbstoffgehalt von $C_{F_2}$ = 8 Gew.-% und einem unveränderten Ballastgehalt in der flüssigen Phase $C_{B_2}$ = 4,25 Gew.-%.

Stufe 2: Aus dem Stabilisierungskessel wird ein Suspensionsstrom $F_{2a}$ von 1400 l/h mit einem Farbstoffgehalt $C_{F_{2a}}$ von etwa 7,2 Gew.-% und einem Ballastgehalt $C_{B_{2a}}$ von etwa 3,8 Gew.-% (Volumenzunahme durch Stabilisierung mit Direktdampf) in die Stufe 2 gepumpt. Die Waschwasserzugabe ($WW_2$) in Stufe 2 beträgt 1200 l/h. Die Permeatmenge ($P_2$) wird auf 1800 l/h geregelt. Damit ergibt sich für den aus der Stufe 2 austretenden Farbstoffsuspensionsstrom $F_3$ 800 l/h mit einem Farbstoffgehalt von $C_{F_3}$ = 12.5 Gew.-% und einem Ballastgehalt von $C_{B3}$ = 2 Gew.-%.

Stufe 3: Zum Farbstoffsuspensionsstrom $F_3$ werden 1700 l/h Waschwasser ($WW_3$) in die Stufe 3 gespeist. Bei einer auf 2000 l/h geregelten Permeatmenge ($P_3$) tritt aus Stufe 3 ein Farbstoffsuspensionsstrom $F_4$ von 500 l/h mit den Endspezifikationen Farbstoffgehalt $C_{F4}$ = 20 Gew.-% und Ballastgehalt $C_{B4}$ = 0,65 Gew.-%.

Diese Verteilung der Waschwasser- und Permeatmengen auf die Ultrafiltrationsstufen 2 und 3 liefert für den festgelegten Farbstoffkonzentrationsfaktor $X_{F2}$ in der Stufe 2 die geringste Abwassermenge.

Beispiel 4

Eine wässrige saure Farbstoffdispersion von C.I. Disperse Brown 1 mit einem Farbstoff- bzw. Ballastgehalt von $C_{F_1}$ = 3,2 Gew.-% und $C_{B_1}$ = 3,8 Gew.-% wird in einer Membrantrennstufe (Ultrafiltration) aufkonzentriert und entsalzt, das Konzentrat in einem Stabilisierungskessel kontinuierlich mit einer Verweilzeit von etwa 30 Minunten bei 95°C behandelt (thermisch stabilisiert).

Diese saure Farbstoffsuspension wird anschliessend in einer 2-stufigen Membrantrennanlage (Ultrafiltration weiter aufkonzentriert und entsalzt. Die Farbstoffsuspension soll nach Beendigung des Verfahrens einen Farbstoffgehalt $C_{F_4}$ von etwa 18 Gew.-% und einen Ballastgehalt von etwa 0,3 Gew.-% haben.

Die Suspension weist vor der Stabilisierung eine Temperatur von 15 bis 20°C und nach der Stabilisierung eine Temperatur von 50 bis 60°C in den Stufen auf. Der Druck in den Kreisläufen liegt bei 4 bis 5 bar.

Das Verfahren wird gemäss dem Flussdiagramm von Fig. 1 durchgeführt, wobei der Konzentratstrom 5 über einen Stabilisierungskessel läuft. Die Membrantrennstufen (1, 2, 3) mit geschlossenem Kreislauf sind mit Moduln bestückt, die auf Trägermaterial Kohlenstoff mit Membranen aus Zirkonoxid beschichtet sind; die Membranfläche beträgt 22 m² pro Stufe bei einem Kreislaufvolumen von ca. 150 l.

Nach Durchlaufen der Startphase wird der für die durchführung des Verfahrens notwendige stationäre Zustand erreicht, wenn das Wasser in den Membrantrennstufen 1 bis 3 durch Farbstoffsuspension der Konzentrationen $C_{F2}$ bis $C_{F4}$ ersetzt ist. Der Volumenstrom $F_1$ der Farbstoffsuspension ist vorgegeben durch die Leistung einer kontinuierlichen Farbstoff-Synthese-Anlage.

Um die gewünschte Endspezifikation der Farbstoffsuspension zu erhalten, wird das Verfahren in den einzelnen Membrantrennstufen wie folgt gesteuert:

Stufe 1: In Stufe 1 werden 3300 l/h Farbstoffsuspension ($F_1$) und 1500 l/h Waschwasser ($WW_1$) gepumpt. Die Permeatmenge der Stufe 1 ($P_1$) wird auf 3500 l/h geregelt. Damit ergeben sich für den aus der Stufe 1 austretenden Farbstoffsuspensionsstrom $F_2$ 1300 l/h mit einem Farbstoffgehalt von $C_{F_2}$ = 8 Gew.-% und einem Ballastgehalt in der flüssigen Phase von 2,6 Gew.-%.

Stufe 2: Aus dem Stabilisierungskessel wird ein Suspensionsstrom $F_{2a}$ von 1450 l/h mit einem Farbstoffgehalt $C_{F_{2a}}$ von etwa 7,3 Gew.-% (Volumenzunahme durch Stabilisierung mit Direktdampf) in die Stufe 2 gepumpt. Die Waschwasserzugabe ($WW_2$) in Stufe 2 beträgt 3000 l/h. Die Permeatmenge ($P_2$) wird auf 3450 l/h geregelt. Damit ergibt sich für den aus der Stufe 2 austretenden Farbstoffsuspensionsstrom $F_3$ 1000 l/h mit einem Farbstoffgehalt von $C_{F_3}$ = 10,5 Gew.-% und einem Ballastgehalt von $C_{B_3}$ = 0,8 Gew.-%.

Stufe 3: Zum Farbstoffsuspensionsstrom $F_3$ werden 3000 l/h Waschwasser ($WW_3$) in die Stufe 3 gespeist. Bei einer auf 3450 l/h geregelten Permeatmenge ($P_3$) tritt aus der Stufe 3 ein Farbstoffsuspensionsstrom $F_4$ von 550 l/h mit den Endspezifikationen Farbstoffgehalt $C_{F_4}$ = 19 Gew.-% und Ballastgehalt $C_{B_4}$ = 0,2 Gew.-%.

Die vom Ballastgehalt weitgehend befreite, immer noch saure Suspension wird anschliessend mit wässriger Natriumhydroxidlösung neutralisiert.

Bei der Verteilung der Waschwasser- und Permeatmengen auf die Ultrafiltrationsstufen 1, 2 und 3 wird die Kapazität der Stufen voll genutzt, um bei festgelegten Farbstoffkonzentrationsfaktoren $X_{F1}$, $X_{F3}$ und $X_{F3}$ den maximalen Entsalzungseffekt zu erzielen.

## Patentansprüche

1. Verfahren zur kontinuierlichen Aufarbeitung von wässrigen Rohfarbstoffsuspensionen in einer mehrstufigen Membrantrennanlage, dadurch gekennzeichnet, dass man
    (a) jeder Membrantrennstufe (n), wobei n eine ganze Zahl grösser als 1, insbesondere 2 bis 5, ist, eine Farbstoffsuspension ($F_n$) sowie Waschwasser ($WW_n$), Permeat ($P_{n+1}$) aus der nachfolgenden Membrantrennstufe (n+1) oder Gemische aus ($WW_n$) und ($P_{n+1}$) zuführt und in eine Farbstoffsuspension ($F_{n+1}$) und ein Permeat ($P_n$) auftrennt, und
    (b) den Grad der Konzentrierung ($X_{F_n}$) und den Entsalzungsgrad ($X_{B_n}$) in jeder Membrantrennstufe über eine geeignete Messgrösse steuert.

2. Verfahren nach Anspruch 1, dadurch gekennzeichnet, dass der Grad der Konzentrierung ($X_{F_n}$) und der Entsalzungsgrad ($X_{B_n}$) in jeder Membrantrennstufe über das Volumen des Permeats ($P_n$) oder das Volumen der Farbstoffsuspensionen ($F_{n+1}$) gemäss den folgenden Beziehungen gesteuert wird:

$$X_{F_n} = \frac{c_{F_{n+1}}}{c_{F_n}} = \frac{F_n}{F_{n+1}}$$

$$X_{B_n} = \frac{c_{B_{n+1}}}{c_{B_n}} = \frac{F_n}{F_n + WW_n}$$

$$P_n = F_n + WW_n - F_{n+1} \quad ,$$

worin $c_{F_n}$ und $c_{F_{n+1}}$ bzw. $c_{B_n}$ und $c_{B_{n+1}}$ die Farbstoff- bzw. Salzkonzentrationen der Farbstoffsuspensionen ($F_n$) und ($F_{n+1}$) sind, die in die n-te Membrantrennstufe eingebracht werden bzw. diese wieder verlassen, und $P_n$ und $WW_n$ die in Anspruch 1 angegebenen Bedeutungen haben, und der Grad der Konzentrierung ($X_{F_{ges}}$) und der Entsalzungsgrad ($X_{B_{ges}}$) der gesamten Membrantrennanlage sich aus dem Produkt der einzelnen $X_{F_n}$- bzw. $X_{B_n}$-Werte ergibt.

3. Verfahren nach Anspruch 1, dadurch gekennzeichnet, dass die Rohfarbstoffsuspension ($F_n$) die wässrige Farbstoffsynthesesuspension, wie sie unmittelbar nach der Farbstoffsynthese anfällt oder eine solche ist, die vorher stabilisiert und standardisiert ist.

4. Verfahren nach mindestens einem der Ansprüche 1 bis 3, dadurch gekennzeichnet, dass man die Rohfarbstoffsuspensionen in den einzelnen Stufen der Membrantrennanlage entsalzt oder entsalzt und konzentriert, wobei die Verfahrensführung in den Membrantrennstufen gleich oder voneinander verschieden sein kann.

5. Verfahren nach Anspruch 4, dadurch gekennzeichnet, dass man die Rohfarbstoffsuspensionen in der ersten Stufe der Membrantrennanlage entsalzt und in den weiteren Stufen entsalzt und aufkonzentriert.

6. Verfahren nach Anspruch 4, dadurch gekennzeichnet, dass man die Rohfarbstoffsuspensionen in der ersten Stufe der Membrantrennanlage entsalzt und konzentriert und in den weiteren Stufen entsalzt.

7. Verfahren nach Anspruch 4, dadurch gekennzeichnet, dass man der Membrantrennstufe (n) die Farbstoffsuspension ($F_n$) und ein Gemisch aus dem Waschwasser ($WW_n$) und dem Permeat ($P_{n+1}$) der nachfolgenden Membrantrennstufe (n+1) zuführt.

8. Verfahren nach mindestens einem der Ansprüche 1 bis 7, dadurch gekennzeichnet, dass die Messgrösse zur Steuerung des Verfahrens die Leitfähigkeit oder das Volumen der Permeate ($P_n$) oder das Volumen der Farbstoffsuspensionen ($F_{n+1}$) ist.

9. Verfahren nach mindestens einem der Ansprüche 1 bis 8, dadurch gekennzeichnet, dass die Membrantrennanlage nach dem Prinzip der Ultrafiltration und/oder der Querstrom-Mikrofiltration betrieben wird.

10. Verfahren nach mindestens einem der Ansprüche 1 bis 9, dadurch gekennzeichnet, dass man die Steuerung der Aufarbeitung der Rohfarbstoffsuspensionen mit einem Prozessrechner vornimmt.

11. Anwendung des Verfahrens nach mindestens einem der Ansprüche 1 bis 10 zur Aufarbeitung von Farbstoffsuspensionen von in Wasser schwer- bis unlöslichen Farbstoffen oder von wasserlöslichen Farbstoffen.

12. Die nach dem Verfahren nach mindestens einem der Ansprüche 1 bis 10 oder in Anwendung des Verfahrens nach Anspruch 11 erhaltenen Farbstoffzubereitungen.

13. Verwendung der Farbstoffzubereitungen nach Anspruch 12 zur Herstellung von verkaufsfertigen flüssigen oder festen Farbstoffpräparaten.

0302015

Figur 1